# EUROPÄISCHE PATENTANMELDUNG

(11) **EP 2 316 262 A1**
(43) Veröffentlichungstag der Anmeldung: **04.05.2011**
(21) Anmeldenummer: 10008639.6
(22) Anmeldetag: 19.08.2010
(51) Int. Cl.: A01K 7/02

(54) **Tränkvorrichtung für Nutzvieh**

(30) Priorität: 20.10.2009 DE 102009050137
(71) Anmelder: Suevia Haiges Gmbh, 74366 Kirchheim/Neckar (DE)
(72) Erfinder: Haiges, Frank, 74366 Kirchheim/Neckar (DE)
(74) Vertreter: Bartels & Partner

(57) **Zusammenfassung**

1. Tränkvorrichtung für Nutzvieh
2. Eine Tränkvorrichtung für Nutzvieh, mit einem wasseraufnehmenden Tränktrog (2), der mit zu schützenden Funktionskomponenten, wie eine steuerbare Wassereinlaufeinrichtung, sowie mit einer die Komponenten schützenden Abdeckeinrichtung (24) versehen ist, ist **dadurch gekennzeichnet, dass** die Abdeckeinrichtung (24) durch eine relativ zum Tränktrog (2) erfolgende Schwenkbewegung zwischen einer geöffneten und einer die zu schützenden Komponenten nach Außen abdeckenden geschlossenen Position bewegbar ist, und dass eine Blockiereinrichtung vorhanden ist, die für eine die Schwenkbewegung der Abdeckeinrichtung (24) aus der geschlossenen Position verhindernde Sperrstellung durch einen Energiespeicher vorgespannt und durch manuellen Eingriff in die Freigabestellung überführbar ist, bei der die Abdeckeinrichtung (24) in die offene Position schwenkbar ist.
3. Fig. 1

## Beschreibung

Die Erfindung betrifft eine Tränkvorrichtung für Nutzvieh, mit einem wasseraufnehmenden Tränktrog, der mit zu schützenden Funktionskomponenten, wie eine steuerbare Wassereinlaufeinrichtung, sowie mit einer die Komponenten schützenden Abdeckeinrichtung versehen ist.

Tränkvorrichtungen dieser Art kommen insbesondere zum Tränken eines Viehbestands beispielsweise von Schweinen, Rindern, Pferden, Schafen und dergleichen, zum Einsatz. Durch die Wassereinlaufeinrichtung wird hierbei die Zufuhr von frischem Wasser für die Versorgung des Viehbestandes gewährleistet.

Die US 3,841,268 offenbart einen Tränktrog mit einem wannenförmigen Behälter für Wasser und mit einer ein Einlaufventil aufweisenden Wassereinlaufeinrichtung, wobei das Einlaufventil durch eine geeignete Abdekkeinrichtung abdeckbar ist. Hierdurch sollen Tiere von einer Beschädigung des Einlaufventils abgehalten werden.

In der Praxis hat sich jedoch gezeigt, dass derartige Abdeckeinrichtungen, insbesondere wenn sie nicht fest mit dem Tränktrog verbunden sind, für viele Tiere ein durchaus überwindbares Hindernis darstellen, so dass es den Tieren gelingt, die zu schützenden Behälterkomponenten, wie Wassereinlaufeinrichtung und dergleichen, ihrem Spieltrieb folgend zu beschädigen oder gar zu zerstören. Eine Abdeckeinrichtung, welche fest mit dem Tränktrog verbunden ist, stellt zwar einen wirksamen Schutz für damit geschützte Funktionskomponenten dar, jedoch ist die Handhabung derartiger Tränktröge umständlich, da für Reinigungsmaßnahmen am Tränktrog oder für Einstell- oder Servicearbeiten an den geschützten Komponenten eine mit dem Tränktrog fest verbundene Abdeckeinrichtung jeweils zunächst entfernt und nach Durchführung der entsprechenden Arbeiten wieder angebracht werden muss. Abgesehen von den hiermit verbundenen Kosten müsste für diese Arbeiten auch jeweils das notwendige Werkzeug, gegebenenfalls in entfernt liegende weite Gebiete, mitgeführt werden.

Ausgehend von diesem Stand der Technik liegt der Erfindung die Aufgabe zugrunde, eine Tränkvorrichtung bereit zu stellen, bei der zu schützende Funktionskomponenten mit einer Abdeckeinrichtung abdeckbar sind und bei der die Handhabung der Abdeckeinrichtung für hierzu autorisierte Personen in einfacher Weise und kostengünstig möglich ist.

Erfindungsgemäß ist diese Aufgabe durch eine Tränkvorrichtung gelöst, die die Merkmale des Patentanspruches 1 in seiner Gesamtheit aufweist.

Danach besteht die wesentliche Besonderheit der Erfindung darin, dass die Abdeckeinrichtung durch eine relativ zum Tränktrog erfolgende Schwenkbewegung zwischen geöffneter und geschlossener Position bewegbar ist und dass eine die Schwenkbewegung in die geöffnete Position sperrende Blockiereinrichtung vorhanden ist, die in ihre Sperrstellung vorgespannt und durch manuellen Eingriff in die Freigabestellung überführbar ist, bei der die Abdeckeinrichtung in die offene Position schwenkbar ist. Dadurch, dass die Blockiereinrichtung durch manuellen Eingriff in die Freigabestellung überführbar ist, ist eine einfache Handhabung der Abdeckeinrichtung bei deren Öffnen und Schließen seitens des Servicepersonals gewährleistet, weil Servicearbeiten, wie das Reinigen des Tränktroges, durchgeführt werden können, ohne dass vom Servicepersonal Werkzeuge mitgeführt und benutzt werden müssen, um die Abdeckeinrichtung in die geöffnete Position zu schwenken. Eine schwenkbare Abdeckeinrichtung stellt für das Servicepersonal auch insofern eine wesentliche Vereinfachung ihrer Tätigkeit dar, weil die in die geöffnete Position geschwenkte Abdeckeinrichtung in dieser Position am Tränktrog verbleiben kann, so dass hier keine geeignete Ablagestelle für die Abdeckeinrichtung zu suchen ist. Dies ist insbesondere beim Einsatz im Außenbereich von Interesse, da hierdurch die Abdeckeinrichtung beispielsweise nicht einfach auf dem Boden abgestellt wird, wodurch zunächst eine Anlagerung von Schmutz an der Abdeckeinrichtung erfolgen könnte, der nach deren erneuter Montage am Tränktrog mit in den Behälter einlaufendem Wasser von der Abdeckeinrichtung abgespült und in das den Tieren zur Verfügung stehende Wasser eingespült werden könnte.

In vorteilhafter Weise kann die Anordnung so getroffen sein, dass die Blockiereinrichtung am Tränktrog festgelegt ist und einen axial zwischen der Freigabestellung und der vorgeschobenen Sperrstellung bewegbaren Sperrbolzen aufweist, der durch eine Federanordnung in seine Sperrstellung vorgespannt ist. Das Überführen der Blockiereinrichtung in die Freigabestellung kann dadurch auf besonders einfache Weise durch manuelles Zurückschieben des Sperrbolzens gegen die wirkende Federkraft vorgenommen werden.

Bei besonders vorteilhaften Ausführungsbeispielen weist die Abdeckeinrichtung eine Abdeckhaube auf, die an einem Wandteil des Tränktroges um eine zumindest näherungsweise horizontale Achse derart schwenkbar angebracht ist, dass sie bei der geschlossenen Position eine auf die Oberseite des Tränktroges abgesenkte Stellung einnimmt, in der sie die im Trog befindlichen, zu schützenden Komponenten zumindest teilweise übergreift. Bei solcher Lagerung der Abdeckhaube stellt die abgesenkte, geschlossene Position die durch das Eigengewicht der Haube bedingte Ruhestellung dar, so dass die Blockiereinrichtung lediglich eine Sicherung gegen das gegen die Gewichtskraft erfolgende Anheben der Abdeckhaube bilden muss.

Für einen bequemen Zugang zum Innenraum des Troges und den darin befindlichen, zu schützenden Komponenten ist die Anordnung vorzugsweise so getroffen, dass die Abdeckhaube aus der geschlossenen Position zum Überführen in die geöffnete Position in eine so weit angehobene Stellung schwenkbar ist, bei der die Oberseite des Troges im wesentlichen gänzlich freiliegend ist.

Bei vorteilhaften Ausführungsbeispielen ist die Blockiereinrichtung an demjenigen Wandteil des Tränktroges vorgesehen, das dem die Schwenklagerung der Abdeckhaube aufweisenden Wandteil gegenüberliegend ist, wobei sich die Abdeckhaube bei der geschlossenen Position über die gesamte Oberseite des Troges von dem einen zu dem anderen Wandteil erstreckt.

Hinsichtlich der Gestaltung der Blockiereinrichtung kann die Anordnung vorzugsweise so getroffen sein, dass der Sperrbolzen der Blockiereinrichtung am betreffenden Wandteil für eine zur Außenseite des Troges hin verlaufende Bewegung in die Sperrstellung vorgespannt ist, in der er eine Verriegelungsbohrung der in der abgesenkten, geschlossenen Position befindlichen Abdeckhaube durchgreift und aus der Verriegelungsbohrung heraus von der Außenseite der Abdeckhaube her manuell zurückschiebbar ist, um die Blockiereinrichtung in die Freigabestellung zu überführen.

Bei besonders vorteilhaften Ausführungsbeispielen bildet die Abdeckhaube mit ihrem die Verriegelungsbohrung aufweisenden Wandteil eine Schrägfläche als Steuerfläche für den Sperrbolzen, an der dieser beim Absenken der Abdeckhaube anläuft und bei Erreichen der geschlossenen Position durch die Vorspannung selbsttätig in die Verriegelungsbohrung einfällt. In besonders vorteilhafter Weise führt so das Absenken der Abdeckhaube ohne weiteres Zutun zu deren selbsttätiger Verriegelung.

Bei besonders vorteilhaften Ausführungsbeispielen ist die Blockiereinrichtung am betreffenden Wandteil des Troges gemeinsam mit der Wasserzulaufeinrichtung angebracht, die einen den Wasserzulauf steuernden, im Troginneren befindlichen Schwimmer aufweist, wobei die Abdeckhaube Seitenteile besitzt, die sich vom geschlossenen Oberteil weg derart erstrekken, dass sie bei abgesenkter, geschlossener Position in den Innenraum des Troges eintauchen, sich von Wandteil zu Wandteil erstrecken und den zwischen ihnen befindlichen Schwimmer schützend umgeben. Dadurch ist der gegen schädliche Einwirkungen seitens der Tiere besonders empfindliche Schwimmer zuverlässig geschützt.

Die erfindungsgemäße Tränkvorrichtung kann so ausgebildet sein, dass sie eine Doppel-Trogtränke bildet, bei der die zu schützenden Komponenten, wie Wassereinlaufeinrichtung mit Schwimmer, im Innenraum des Troges mittig angebracht sind, so dass bei geschlossener Position der Abdeckeinrichtung beidseits derselben ein Tränkeraum im Trog gebildet ist.

Nachstehend ist die Erfindung anhand eines in der Zeichnung dargestellten Ausführungsbeispieles im Einzelnen erläutert. Es zeigen:
- Fig. 1: eine perspektivische Schrägansicht des Ausführungsbeispieles der erfindungsgemäßen Tränkvorrichtung in Form einer Dop- pel-Trogtränke, wobei die Abdeckeinrichtung in der geschlos- senen Position dargestellt ist;
- Fig. 2: eine perspektivische Schrägansicht des Ausführungsbeispie- les, wobei jedoch die Abdeckeinrichtung in der geöffneten Position dargestellt ist;
- Fig. 3: eine gegenüber Fig. 1 und 2 stark vergrößert dargestellte per- spektivische Schrägansicht lediglich der an einem Wandteil des Tränktroges angebrachten Blockiereinrichtung und
- Fig. 4 und 5: stark schematisch vereinfacht und abgebrochen gezeichnete Teilschnittdarstellungen der Blockiereinrichtung und des da- mit zusammenwirkenden Teiles der Abdeckhaube, wobei der Sperrbolzen der Blockiereinrichtung in der Sperrstellung bzw. in der manuell zurückgeschobenen Freigabestellung darge- stellt ist, bei der die Abdeckhaube in die geöffnete Position schwenkbar ist.

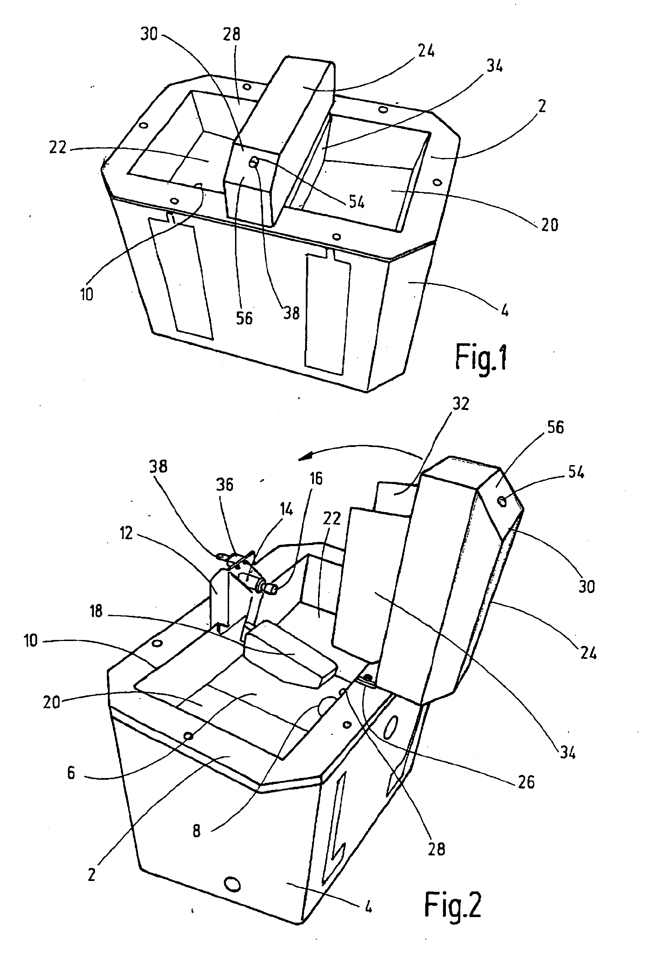

Nachstehend ist die Erfindung am Beispiel einer in Fig. 1 und 2 im Gesamten dargestellten Doppel-Trogtränke erläutert, bei der ein Tränktrog 2 mit einem Innenraum rechteckiger Form einen Einsatz in einem Unterteil 4 bildet. Dabei bildet der Tränktrog 2 einen metallischen Einsatz, beispielsweise aus Edelstahl, während das Unterteil 4 aus einem Kunststoffwerkstoff gefertigt sein kann. Der Trog 2 bildet am Grund eine leichte Vertiefung 6 (Fig. 2) mit einem Wasserablauf 8, der im Tränkebetrieb geschlossen ist, jedoch für Wartung und Reinigung vom Unterteil 4 her geöffnet werden kann. Am Wandteil 10 an einer Langseite der Rechteckform befindet sich an einem Trägerteil 12 eine Wassereinlaufeinrichtung 14 in Form eines bei derartigen Tränkvorrichtungen üblichen Zulaufventils mit einem Wasseraustritt 16 ins Innere des Troges 2, wobei der Wasserzulauf durch einen im Innenraum des Troges 2 befindlichen Schwimmer 18 so steuerbar ist, dass im Trog 2 ein für das Tränken der Tiere geeigneter Wasserpegel beibehalten wird. Wie Fig. 2 zeigt, befindet sich das Trägerteil 12 mit Wassereinlaufeinrichtung 14 und Schwimmer 18 am Wandteil 10 in mittiger Position, so dass beidseits ein Tränkeraum 20 und ein Tränkeraum 22 gebildet sind, es sich also um eine Doppel-Trogtränke handelt.

Die Fig. 1 zeigt eine Abdeckeinrichtung in Form einer Abdeckhaube 24 in einer abgesenkten, geschlossenen Position, in der sie eine Schutzabdeckung für die Wassereinlaufeinrichtung 14 mit Wasseraustritt 16 und Schwimmer 18 bildet. Die Abdeckhaube 24 ist mittels eines Scharniers 26 an den dem Wandteil 10 gegenüberliegenden Wandteil 28 um eine horizontale Achse derart schwenkbar gelagert, dass sich die Abdeckhaube 24 bei der in Fig. 1 gezeigten geschlossenen Position im Trog 2 mittig vom Wandteil 28 zum Wandteil 10 erstreckt und dabei die zu schützenden Komponenten überdeckt. In dieser Position sind nicht nur durch das Haubenoberteil 30 die Komponenten, wie Wassereinlaufeinrichtung 14 und Wasseraustritt 16 am Trägerteil 12 schützend überdeckt, sondern die Abdeckhaube 24 weist auch Seitenteile 32 und 34 auf, die bei der geschlossenen Position ins Innere des Troges 2 eintauchen und den Schwimmer 18 zwischen sich schützend aufnehmen.

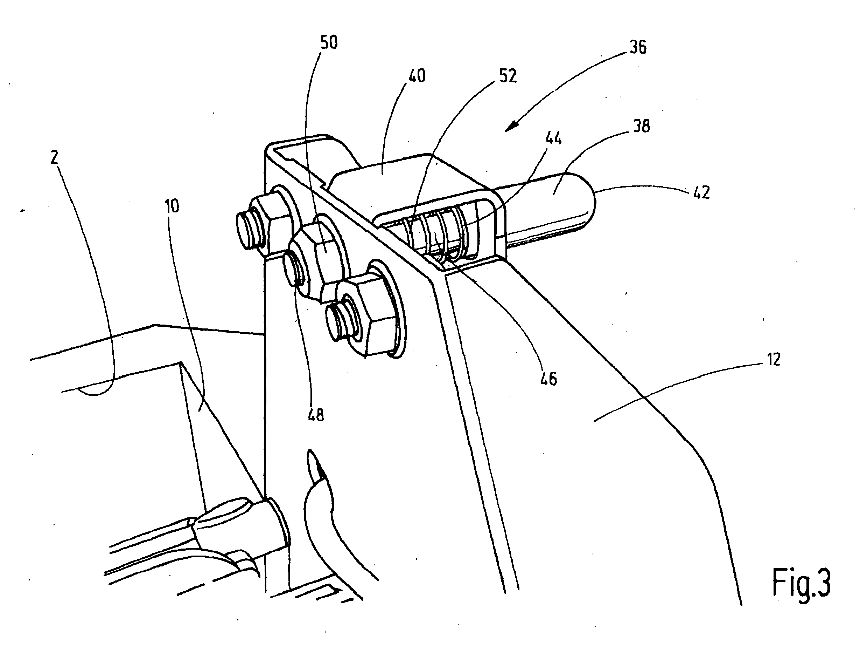

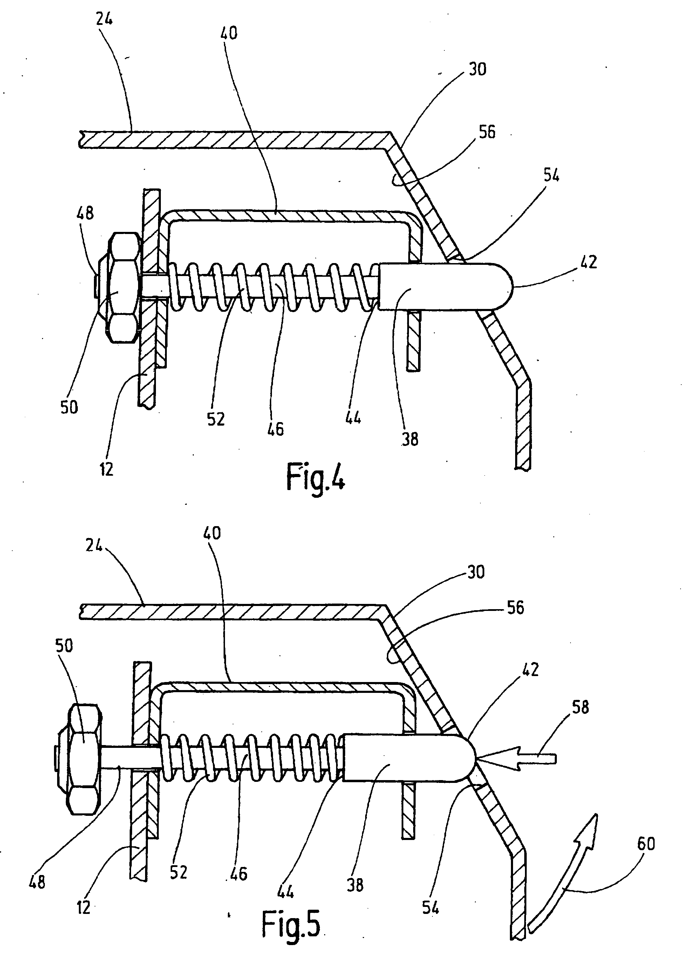

Das Trägerteil 12 bildet auch die Tragstruktur für die Blockiereinrichtung 36 zur Verriegelung der Abdeckhaube 24 in der in Fig. 1 gezeigten geschlossenen Position. Nähere Einzelheiten der Blockiereinrichtung 36 sind in den Fig. 3 bis 5 dargestellt. Wie gezeigt, ist ein Sperrbolzen 38 in einem Federgehäuse 40 axial verschiebbar geführt, das am Trägerteil 12 so angebracht ist, dass der Sperrbolzen 38 zwischen einer gegen die Außenseite des Wandteiles 10 hin vorgeschobenen Sperrstellung, die er bei der Darstellung von Fig. 1 bis 4 einnimmt, und einer zurückgeschobenen Freigabestellung bewegbar ist, die er in Fig. 5 einnimmt. Der Sperrbolzen 38 weist in einem Abstand von seinem gerundeten Ende 42 eine Stufe 44 auf, an die sich ein verjüngter Abschnitt 46 anschließt, an dem endseits ein Außengewinde 48 vorgesehen ist, auf dem wiederum eine selbstsichernde Mutter 50 sitzt. Zwischen der Innenseite des Filtergehäuses 40 und der Stufe 44 ist eine Schraubenfeder 52 eingespannt, die einen den Sperrbolzen 38 für seine Verschiebebewegung in die Sperrstellung vorspannenden Energiespeicher bildet.

Die Fig. 1 und 4 zeigen, dass der in der Sperrstellung befindliche Sperrbolzen 38 zur Verriegelung der Abdeckhaube 24 in der geschlossenen Position eine Verriegelungsbohrung 54 durchgreift, die sich am Oberteil 30 der Abdeckhaube 24 an einer Schrägfläche 56 befindet. Bei einem Absenken der Abdeckhaube 24 aus der in Fig. 2 gezeigten geöffneten Position in die geschlossene Position bildet daher die am Ende 42 des Sperrbolzen 38 anlaufende Schrägfläche 56 der Abdeckhaube 24 eine Steuerfläche, die den Sperrbolzen 38 zunächst gegen die Kraft der Feder 52 zurückschiebt, bis der Sperrbolzen 38 in die Verriegelungsbohrung 54 einfällt, siehe Fig. 1 und insbesondere Fig. 4, wo dieser Zustand jeweils dargestellt ist.

Um die Blockiereinrichtung 36 zu entsperren, wird der Sperrbolzen 38 gegen die Federwirkung zurückgeschoben, indem wie in Fig. 5 mit einem Pfeil 58 angedeutet ist, der Sperrbolzen 38 durch Druck auf das Ende 42 manuell zurückgeschoben wird, wobei sich die Mutter 50 vom Trägerteil 12 abhebt. Die Abdeckhaube 24 kann nun frei, wie mit Pfeil 60 in Fig. 5 angedeutet ist, nach oben geschwenkt werden. Gleichzeitig ist die Blokkiereinrichtung 36, indem der Sperrbolzen 38 unter der Wirkung der Feder 52 wieder in die Sperrstellung vorgeschoben wird, wieder bereit, um beim nächstfolgenden Absenken der Abdeckhaube 24 die Verriegelung wieder selbsttätig herbeizuführen.

## Patentansprüche

1. Tränkvorrichtung für Nutzvieh, mit einem wasseraufnehmenden Tränktrog (2), der mit zu schützenden Funktionskomponenten, wie eine steuerbare Wassereinlaufeinrichtung (14), sowie mit einer die Komponenten schützenden Abdeckeinrichtung (24) versehen ist, **dadurch gekennzeichnet, dass** die Abdeckeinrichtung (24) durch eine relativ zum Tränktrog (2) erfolgende Schwenkbewegung zwischen einer geöffneten und einer die zu schützenden Komponenten nach Außen abdeckenden geschlossenen Position bewegbar ist, und dass eine Blockiereinrichtung (36) vorhanden ist, die für eine die Schwenkbewegung der Abdeckeinrichtung (24) aus der geschlossenen Position verhindernde Sperrstellung durch einen Energiespeicher (52) vorgespannt und durch manuellen Eingriff in die Freigabestellung überführbar ist, bei der die Abdeckeinrichtung (24) in die offene Position schwenkbar ist.

2. Tränkvorrichtung nach Anspruch 1, **dadurch gekennzeichnet, dass** die Blockiereinrichtung (36) am Tränktrog (2) festgelegt ist und einen axial zwischen der Freigabestellung und der vorgeschobenen Sperrstellung bewegbaren Sperrbolzen (38) aufweist, der durch eine Federanordnung (52) in seine Sperrstellung vorgespannt ist.

3. Tränkvorrichtung nach Anspruch 1 oder 2, **dadurch gekennzeichnet, dass** die Abdeckeinrichtung eine Abdeckhaube (24) aufweist, die an einem Wandteil (28) des Tränktroges (2) um eine zumindest näherungsweise horizontale Achse derart schwenkbar angebracht ist, dass sie bei der geschlossenen Position eine auf die Oberseite des Tränktroges (2) abgesenkte Stellung einnimmt, in der sie die im Trog (2) befindlichen, zu schützenden Komponenten zumindest teilweise übergreift.

4. Tränkvorrichtung nach Anspruch 3, **dadurch gekennzeichnet, dass** die Abdeckhaube (24) aus der geschlossenen Position zum Überführen in die geöffnete Position in eine so weit angehobene Stellung schwenkbar ist, bei der die Oberseite des Troges (2) im wesentlichen gänzlich freiliegend ist.

5. Tränkvorrichtung nach Anspruch 3 oder 4, **dadurch gekennzeichnet, dass** die Blockiereinrichtung (36) an demjenigen Wandteil (10) des Tränktroges vorgesehen ist, das dem die Schwenklagerung der Abdeckhaube (24) aufweisenden Wandteil (28) gegenüberliegend ist, und dass sich die Abdeckhaube (24) bei der geschlossenen Position über die gesamte Oberseite des Troges (2) von dem einen (28) zu dem anderen Wandteil (10) erstreckt.

6. Tränkvorrichtung nach einem der Ansprüche 2 bis 5, **dadurch gekennzeichnet, dass** der Sperrbolzen (38) der Blockiereinrichtung (36) am betreffenden Wandteil (10) für eine zur Außenseite des Troges (2) hin verlaufende Bewegung in die Sperrstellung vorgespannt ist, in der er eine Verriegelungsbohrung (54) der in der abgesenkten, geschlossenen Position befindlichen Abdeckhaube (24) durchgreift und aus der Verriegelungsbohrung (54) heraus von der Außenseite der Abdeckhaube (24) her manuell zurückschiebbar ist, um die Blockiereinrichtung (36) in die Freigabestellung zu überführen.

7. Tränkvorrichtung nach Anspruch 6, **dadurch gekennzeichnet, dass** die Abdeckhaube (24) mit ihrem die Verriegelungsbohrung (54) aufweisenden Wandteil eine Schrägfläche (56) als Steuerfläche für den Sperrbolzen (38) bildet, an der dieser beim Absenken der Abdeckhaube (24) anläuft und bei Erreichen der geschlossenen Position durch die Vorspannung (52) selbsttätig in die Verriegelungsbohrung (54) einfällt.

8. Tränkvorrichtung nach einem der Ansprüche 5 bis 7, **dadurch gekennzeichnet, dass** die Blockiereinrichtung (36) am betreffenden Wandteil (10) des Troges (2) gemeinsam mit der Wassereinlaufeinrichtung (14) angebracht ist, die einen den Wasserzulauf steuernden, im Troginneren befindlichen Schwimmer (18) aufweist, und dass die Abdeckhaube (24) Seitenteile (32, 34) besitzt, die sich vom geschlossenen Haubenoberteil (30) weg derart erstrecken, dass sie bei abgesenkter, geschlossener Position in den Innenraum des Troges (2) eintauchen, sich von Wandteil (28) zu Wandteil (10) erstrecken und den zwischen ihnen befindlichen Schwimmer (18) schützend umgeben.

9. Tränkvorrichtung nach einem der Ansprüche 1 bis 8, **dadurch gekennzeichnet, dass** sie eine Doppel-Trogtränke bildet, bei der die zu schützenden Komponenten, wie Wassereinlaufeinrichtung (14) mit Schwimmer (18), im Innenraum des Troges (2) mittig angebracht sind, so dass bei geschlossener Position der Abdeckeinrichtung (24) beidseits derselben ein Tränkeraum (20 und 22) im Trog (2) gebildet ist.
